# EUROPEAN PATENT APPLICATION

(11) **EP 1 127 904 A1**
(43) Date of publication of application: **29.08.2001**
(21) Application number: 00103710.0
(22) Date of filing: 22.02.2000
(51) Int. Cl.: C08G 18/28, C08G 18/80, C09D 175/02

(54) **Polyisocyanate reaction systems for application in wooden floor parts**

(71) Applicant: Huntsman ICI Chemicals, LLC, Salt Lake City, Utah 84108 (US)
(72) Inventor: Broekaert, Marc, Hunstman ICI Europe Ltd, 3075 Everberg (BE)
(74) Representative: Moens, Marnix Karel Christiane

(57) **Abstract**

1. A process for forming a polyurethane on the surface of a wooden floor part comprising the steps of:
   (a) providing a two-part reaction system comprising, as a first part i), a polyisocyanate as a second part ii), an amine
   (b) applying said polyisocyanate to said surface
   (c) subsequently applying said amine to said surface thereby allowing the reaction system to be formed on said surface.

## Description

The present invention relates to wooden floor parts such as floor panels, in particular for application such as parquet floor.

One of the major problems is using said parts is that on significant wetting this parts tend to expand non-uniformly i.e. the edges of the wooden floor part tend to swell more than the central portion and produce a ridge between the swelled edge and the remainder of the floor part. It is believed that this edge swell is caused primarily because the edges absorb water.

Since the edges are normally tongue and grooved, the swelling may occur prior to the assembly of the floor parts to form the subfloor or may occur during use when water is spilled on the subfloor and absorbed by the edges of the floor parts.

It is an object of the present invention to provide wooden floor parts, especially floor panels having improved edge swell.

It is another object of the present invention to provide a reaction system which can be cold cured. It is another object of the present invention to provide a reaction system which can be cured at or near room temperature within a relatively short period of time.

The above objectives have been met by a two-part reaction system for producing a polyurethane and the cured polyurethane product therefrom. The specific reaction system for producing polyurethane meets the criteria of controlled onset of cure, with rapid curing achieved and providing the required end characteristic with respect to swellability to the end product i.e. the wooden floor panel.

In one embodiment, there is a two-part reaction system for producing a polyurethane where the two parts are located in separate containers, which are effective to prevent contact thereof until the application is desired.

The two-part reaction system comprises:
a. a first part comprising a polyisocyanate
b. a second part comprising an amine

In yet another embodiment of the present invention, there is a method of forming a polyurethane on floor parts, especially the edges, using said two-part reaction system. By reaction system as used herein means a system or assemblage of reaction products which, in the system, are unreacted or not fully reacted but which in use, are reacted with each other.

### Detailed description of the invention

The two-part reaction system of the present invention comprises an polyisocyanate. The organic polyisocyanates useful in this invention have a number-average isocyanate functionality from 1.8 to 4.0, preferably from 2 to 3, and a number average molecular weight between 100 and 5000, preferably between 120 and 1800 and most preferably between 170 and 800. At least 50 mole percent, preferably at least 90 mole percent, of isocyanate groups in the species comprising the polyisocyanate are bonded directly to aromatic rings.

Suitable aromatic polyisocyanates include, for example, p-phenylene diisocyanate; m-phenylene diisocyanate; 2,4-toluene diisocyanate; 2,6-toluene diisocyanate; naphthalene diisocyanate; dianisidine diisocyanate; polymethylene polyphenyl polyisocyanates; 2,4'-diphenylmethane diisocyanate (2,4'-MDI); 4,4'-diphenylmethane diisocyanate (4,4'-MDI); 3,3'-dimethyl-4,4'-biphenylene diisocyanate; polydiphenylmethane polyisocyanate having a functionality greater than 2, mixtures thereof and the like. The MDI isomers (2,4' and 4,4'), mixtures of these isomers with polydiphenylmethane polyisocyanates, polyphenylmethane polyisocyanate itself and derivatives thereof are most preferred. The polyphenylmethane polyisocyanates and derivatives thereof are most preferred.

The polyisocyanate may include minor amounts of aliphatic polyisocyanates. Suitable aliphatic polyisocyanates include isophorone diisocyanate; 1,6-hexamethylene diisocyanate; 1,4-cyclohexyl diisocyanate; saturated analogues of the above mentioned aromatic polyisocyanates, mixtures thereof and the like.

Suitable uretonimine-modified polyisocyanates can be used and are generally prepared by a process wherein an aromatic polyisocyanate is heated to a temperature exceeding the melting temperature of the polyisocyanate, for example, 140°C, in the presence of a carbodiimide catalyst to convert some of the isocyanate groups to carbodiimide groups and then allowing the carbodiimide groups to react with unreacted isocyanate groups to form uretonimine groups.

Suitable isocyanate-terminated prepolymers can be used and are prepared by reacting an excess of polyisocyanate with polyols, including aminated polyols or imines/enamines thereof. As used herein, the term "isocyanate-terminated prepolymer" includes the prepolymer as well as the pseudoprepolymer, i.e., a mixture of the prepolymer and the polyisocyanate from which the prepolymer is prepared. Suitable polyols for preparing prepolymers include:
(a) polyether polyols and/or hydrocarbon-based polyols having a molecular weight from 60 to 400, and an average hydroxyl functionality from 1.9 to 4;
(b) polyether (and/or thioether) polyols having a molecular weight of at least 400, preferably 1000 or higher, and an average hydroxyl functionality from 1.9 to 4;
(c) polyester polyols having a molecular weight from 100 to 1000, and an average hydroxyl functionality from 1.9 to 4;

Typically, the amount of polyisocyanate used is in the range of from 100 to 400 parts by weight based on 100 parts by weight of the mixture of amine and solvent.

The second part of the reaction system of the present invention comprises an amine at least one of the imidazoles represented by the general formula below: 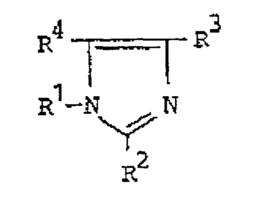 wherein R<1> is hydrogen, alkyl of 1 to 4 carbons, dimethylaminopropyl, benzyl, vinyl, or hydroxyalkyl of 1 to 3 carbons; R<2> is hydrogen, alkyl of 1 to 4 carbons, allyl, benzyl, or phenyl; and R<3> and R<4> are respectively hydrogen, alkyl of 1 to 4 carbons, or hydroxymethyl.

In the process of the present invention, at least one of the imidazoles represented by the general formula below is employed as an amine.
wherein R<1> is hydrogen, alkyl of 1 to 4 carbons, dimethylaminopropyl, benzyl, vinyl, or hydroxyalkyl of 1 to 3 carbons; R<2> is hydrogen, alkyl of 1 to 4 carbons, allyl, benzyl, or phenyl; and R<3> and R<4> are respectively hydrogen, alkyl of 1 to 4 carbons, or hydroxymethyl.

The imidazoles in the present invention include specifically 1-methylimidazole, 2-methylimidazole, 1,2-dimethylimidazole, 1,4-dimethylimidazole, 1,2,4,5-tetramethylimidazole, 1-methyl-2-ethylimidazole, 1,4-dimethyl-2-ethylimidazole, 1-methyl-2-isopropylimidazole, 1-methyl-2-phenylimidazole, 1-n-butyl-2-methylimidazole, 1-isobutyl-2-methylimidazole, 1-vinylimidazole, 1-benzyl-2-methylimidazole, 1-(3-dimethylaminopropyl)imidazole, and the like. Among these compounds, preferable are 1-methylimidazole, 2-methylimidazole, 1,2-dimethylimidazole, 1-(3-dimethylaminopropyl) imidazole, 1-n-butyl-2-methylimidazole, and 1-isobutyl-2-methylimidazole.

The amine of the present invention may be used combined with another tertiary amine. The tertiary amine includes triethylamine, N,N-dimethylcyclohexylamine, N,N,N',N'-tetramethylethylenediamine, N,N,N',N' - tetramethylpropylenediamine, N,N,N',N",N"-pentamethyldiethylenetriamine, N,N,N',N",N" - pentamethyl - (3-aminopropyl) ethylenediamine, N,N,N',N",N" - pentamethyldipropylenetriamine, N,N,N',N'-tetramethylguanidine, 1,3,5-tris(N,N-dimethylaminopropyl)hexahydro-s-triazine, 1,8-diazabicyclo 5.4.0 undecene-7, triethylenediamine, N,N,N',N'-tetramethylhexamethylenediamine, N-methyl-N'-(2-dimethylamino)ethylpiperazine, N,N'-dimethylpiperazine, N-methylpiperazine, N-methylmorpholine, N-ethylmorpholine, N,N-dimethylethanolamine, N,N-dimethylaminopropylamine, dimethylaminoethoxyethanol, N,N,N'-trimethylaminoethylethanolamine, N-trioxyethylene-N,N-dimethylamine, 1,3-bis(N,N-dimethylamino)-2-propanol, bis (2-dimethylaminoethyl) ether, and the like. Among the above tertiary amines, preferable are triethylenediamine, N-methyl-N'-(2-dimethylamino) ethylpiperazine, bis (2-dimethylaminoethyl) ether, N-methylmorpholine, and N-ethylmorpholine. Further, organic carboxylic acid salts of the aforementioned imidazoles and organic carboxylic acid salts of the aforementioned tertiary amines may be used.

The amine of the present invention may be prepared from the above-mentioned imidazole singly or from a mixture of the imidazole and another amine. In the preparation from the mixture, a solvent such as dipropylene glycol, ethylene glycol, 1,4-butanediol, water, and the like may be used if necessary as the solvent. The amount of the solvent is not specially limited. Typically the amine is used in the range of from 1 to 40, preferably from 1 to 10 parts by weight based on 100 parts by weight of the solvent.

Many of the polyisocyanates and the amine described above, and others of similar structure, are low viscosity liquids. Liquidity and low viscosity make it easier to apply the reaction system. In addition, low viscosity liquid curing agents can act as flow modifying agents during the application of the adhesive/sealand reaction system. Consequently, it is preferred for both the polyisocyanate and the amine to be liquids at room temperature. However, it is possible for one of the components of the system to be a solid as long as that component can be dissolved fully in the other liquid component prior to application of the reaction system to a substrate. This will ensure that the reaction system is a liquid when applied to a substrate.

It is also preferred to apply the polyisocyanate and the amine separately to the floor part instead of mixing them together before they applied to the floor part. When applied separately, the reaction system is formed on the floor part once the second component is applied to the floor part.

In a preferred embodiment, one or several sides of a wooden floor part are being sprayed or painted with the polyisocyanate. Subsequently the amine is then sprayed or painted on the polyisocyanate thereby forming the polyurethane on the surface of said sides.

Preferably, the reaction system will be provided on the floor part near the top edge and bottom edge. Example of such a spraying technique is described in EP-A-903 451 and US 4,839,202. The present invention is described, but not limited, by reference to the example.

The following formulations were tested on MDF floor panel. Polyisocyanate 70-99 parts by weight, amine 30-1 parts by weight, water 70-99 parts by weight. The polyisocyanate is Suprasec® 2214 made by Huntsman Corporation. The amine is 2 methylimidazole. The test was carried out by applying a small quantity of product on a well defined surface in order to prevent spilling/staining/sticking together of the panels, with a distance between the two application heads of 10 cm to a few metres, the distance being related to the space on the production line, the speed of the production line and the viscosity of the isocyanate product, the dosage of the isocyanate product and the absorbing efficiency of the substrate. The MDF wood panels treated with the above formulations have superior edge swell properties compared to untreated MDF wood panels.

## Claims

1. A process for forming a polyurethane on the surface of a wooden floor part comprising the steps of:
(a) providing a two-part reaction system comprising, as a first part i), a polyisocyanate as a second part ii), an amine represented by the formula (I)
(b) applying said polyisocyanate to said surface
(c) subsequently applying said amine to said surface thereby allowing the reaction system to be formed on said surface. 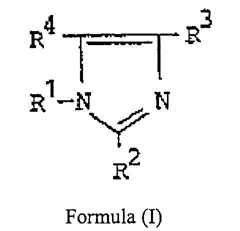 wherein R<1> is hydrogen, alkyl of 1 to 4 carbons, dimethylaminopropyl, benzyl, vinyl, or hydroxyalkyl of 1 to 3 carbons; R<2> is hydrogen, alkyl of 1 to 4 carbons, allyl, benzyl, or phenyl; and R<3> and R<4> are respectively hydrogen, alkyl of 1 to 4 carbons, or hydroxymethyl.

2. A process according to claim 1 wherein the amine is selected from 1-methylimidazole, 2-methylimidazole, 1,2-dimethylimidazole, 1-(3-dimethylaminopropyl) imidazole, 1-n-butyl-2-methylimidazole, and 1-isobutyl-2-methylimidazole.

3. A process according to claim 1 wherein said surface is the edge of a wooden floor part.

4. A process according to claim 1-3 whereby the polyisocyanate and/or amine is applied to the surface by spraying technique
